# EUROPÄISCHE PATENTSCHRIFT

(11) **EP 4 316 211 B1**
(45) Veröffentlichungstag und Bekanntmachung des Hinweises auf die Patenterteilung: **26.02.2025**
(21) Anmeldenummer: 22712321.3
(22) Anmeldetag: 01.03.2022
(51) Int. Cl.: H05B 45/54, H05B 45/58, B60Q 11/00, H05B 47/23

(54) **KURZSCHLUSSFEHLERERKENNENDE BELEUCHTUNGSVORRICHTUNG FÜR EINEN KRAFTFAHRZEUGSCHEINWERFER**
LIGHTING DEVICE FOR A MOTOR VEHICLE HEADLIGHT CAPABLE OF DETECTING SHORT CIRCUITS
DISPOSITIF D'ÉCLAIRAGE DÉTECTANT UN DÉFAUT DE COURT-CIRCUIT POUR UN PHARE DE VÉHICULE AUTOMOBILE

(30) Priorität: 29.03.2021 EP 21165642
(43) Veröffentlichungstag der Anmeldung: 07.02.2024
(73) Patentinhaber: ZKW Group GmbH, 3250 Wieselburg (AT)
(72) Erfinder: PETSCH, Daniel, 3292 Gaming (AT)
(74) Vertreter: Patentanwaltskanzlei Matschnig & Forsthuber OG
(86) Internationale Anmeldenummer: PCT/EP2022/055044
(87) Internationale Veröffentlichungsnummer: WO 2022/207209

(56) Entgegenhaltungen:
- AT-B1- 515 546
- DE-A1- 102008 008 217
- US-A1- 2018 049 301
- US-B1- 10 178 734

## Beschreibung

Die Erfindung betrifft eine kurzschlussfehlererkennende Beleuchtungsvorrichtung für einen Kraftfahrzeugscheinwerfer, umfassend einen Spannungseingang und einen Anschluss zur Verbindung mit Massepotential, und einen über den Spannungseingang versorgten Leistungsstrang, der eine Anzahl an zu überwachenden Lichtquellen umfasst, wobei die Lichtquellen zur Abgabe des Lichts der Beleuchtungsvorrichtung eingerichtet sind und die Lichtquellen innerhalb des Leistungsstrangs miteinander in Serie geschaltet sind.

Bisher war es in der Automobilindustrie üblich, Beleuchtungsvorrichtungen, die für Scheinwerfer vorgesehen sind, lediglich hinsichtlich einer bestimmten Art des Ausfalls zu überprüfen, nämlich jener, in der ein Ausfall einer oder mehrerer Lichtquellen eine Unterbrechung der durch die Lichtquelle im Normalzustand schließbaren elektrischen Verbindung zur Folge hat. So ist allgemein bekannt, dass z.B. Glühlampen, Halogenlampen, Xenon-Lampen aber auch Halbleiterbauelemente, wie z.B. LEDs, bei einem Ausfall typischerweise nichtleitend werden, d.h. dass keine Stromleitung über die Lichtquelle erfolgt. Sind mehrere Lichtquellen in Serie geschaltet und fällt dabei eine der Lichtquellen aus, so hat dies ein Nichtleiten der Lichtquelle zur Folge, welches wiederum einen Ausfall des gesamten Lichtquellenstranges bedingt und damit auch funktionstüchtige, seriell geschaltete Lichtquellen außer Betrieb gesetzt werden.

Allerdings kann auch eine zweite Fehlerart auftreten, nämlich ein Ausfall einer Lichtquelle, der sich in einem Kurzschluss derselben äußert. Diese Art von Fehler war in der Vergangenheit selten, weshalb in der Automobilindustrie bisher keine besonderen Maßnahmen zur Erkennung von Kurzschlüssen von Lichtquellen gesetzt wurden. Es wurde bisher lediglich die Fehlerart der zuvor genannten Art geprüft, indem durch Wegfall des Stromes (durch ausfallbedingtes elektrisches Nichtleiten der Lichtquelle) auf die Funktionstüchtigkeit einer Beleuchtungsvorrichtung rückgeschlossen.

Die US 2018/0049301 A1 betrifft eine Vorrichtung zur Erkennung des Ausfalls von LEDs. Die US 10,178,734 B1 betrifft einen LED-Leuchtschaltkries zur Erkennung individueller Fehler von LEDs. Die DE 10 2008 008 217 A1 betrifft eine Schaltungsanordnung zur Erkennung eines Kurzschlusses von LEDs. Die AT 515546 B1 betrifft eine LED-Anordnung mit einer Überwachungsschaltung zur Kurzschlussüberwachung.

Es hat sich herausgestellt, dass bei Einsatz moderner Lichtquellen vermehrt Fehler der zweiten Fehlerart, also Kurzschlussfehler, eintreten. Dabei erfolgt in der Regel keine Abstrahlung von Licht der von dem Kurzschluss betroffenen Lichtquelle. Die anderen seriell vor- oder nachgelagerten Lichtquellen können aber weiterhin mit Strom versorgt werden. Durch solche Ausfälle wird das durch die Beleuchtungsvorrichtung abgestrahlte Lichtbild negativ verändert. Eine Aufgabe der Erfindung besteht daher darin, eine möglichst betriebssichere Beleuchtungsvorrichtung zu schaffen, die es ermöglicht, den Betrieb der Beleuchtungsvorrichtung zu überprüfen und Maßnahmen wie zum Beispiel eine Fehlerroutinen einleiten zu können.

Diese Aufgabe wird mit einer Beleuchtungsvorrichtung der eingangs genannten Art gelöst, die erfindungsgemäß einen Hilfsstrang mit darin angeordneten, in Serie zueinander geschalteten, Transistoren aufweist, wobei jeder Lichtquelle des Leistungsstrangs einer der Transistoren zugeordnet ist, und damit ein Überwachungspaar, bestehend aus einer zu überwachenden Lichtquelle und einem der Überwachung zugeordneten Transistor, gebildet wird, wobei jeder Transistor mit der Kathode und Anode der Lichtquelle dergestalt gekoppelt ist, dass die im Normalbetrieb an der Lichtquelle abfallende Spannung dazu herangezogen wird, den Transistor durchzuschalten, und im Kurzschlussfall der Lichtquelle, der durch den Kurzschluss verursachte Spannungseinbruch, zu einem Sperren des Transistors und damit des Hilfsstranges führt, wobei eine mit dem Hilfsstrang gekoppelte Fehlererkennungsvorrichtung vorgesehen ist, die dazu eingerichtet ist, im Falle des Sperrens des Hilfsstranges ein Fehlersignal auszugeben und/oder eine Fehlerroutine auszulösen.

Ist eine Lichtquelle eines Lichtquellenstranges daher aufgrund eines Fehlers kurzgeschlossen, so nimmt im Falle der Speisung über eine Stromquelle lediglich die Strangspannung ab. Durch die Überwachung mittels Transistoren kann aber trotz weiterführenden Betriebs (und damit einer Vermeidung eines Totalausfalls bzw. eines Abschaltens des Leistungsstrangs) der Kurzschlussfehler erkannt und ggf. rückgemeldet werden. Bei den Lichtquellen kann es sich beispielsweise um LED-Lichtquellen handeln. Der Ausdruck "zur Verbindung mit Massepotential" bedeutet dabei nicht, dass der betreffende Anschluss zwingend mit Massepotential verbunden werden muss. Der Fachperson ist klar, dass lediglich eine entsprechende Spannungsdifferenz zwischen dem Spannungseingang und dem Anschluss zur Verbindung mit Masse erforderlich ist, um die Beleuchtungsvorrichtung elektrisch in Betrieb zu nehmen. Die Bezugspotentiale selbst sind dabei grundsätzlich nebensächlich. Das bedeutet, der Anschluss muss nicht mit Masse verbunden sein, sondern es sollte nur die Verbindung mit Masse möglich sein. Die Anzahl der Lichtquellen beträgt z.B. zumindest 2, 3, oder 4, kann aber auch deutlich höher sein und kann von der Fachperson in Abhängigkeit von dem jeweiligen Anwendungsfall bestimmt werden.

Erfindungsgemäß ist vorgesehen, dass die Fehlererkennungsvorrichtung zur Durchführung einer Fehlerroutine eingerichtet ist, in der der Betrieb der Lichtquellen im Falle der Erkennung eines Fehlers selbständig abgeschaltet wird, wobei hierzu vorgesehen ist, dass sich sowohl der Leistungsstrang als auch der Hilfsstrang zwischen dem Spannungseingang und dem Masseanschluss erstrecken und die Fehlererkennungsvorrichtung als ein Hauptschalter ausgebildet ist, der in Serie zu dem Leistungsstrang angeordnet und dergestalt mit dem Hilfsstrang gekoppelt ist, sodass im Falle eines Durchschaltens des Hilfsstranges der Hauptschalter elektrisch leitet und im Falle eines Sperrens des Hilfsstranges elektrisch sperrt. Auf diese Weise kann z.B. verhindert werden, dass eine starke Reduktion der Lichtintensität der Beleuchtungsvorrichtung, bedingt durch den Ausfall mehrerer Lichtquellen des Leistungsstrangs aufgrund eines Kurzschluss einer Lichtquelle, unbemerkt bleibt und somit sogar die gesetzliche Mindestanforderung an die Beleuchtungsvorrichtung unterschritten wird, womit ebenso eine erhöhte Gefährdung aller Verkehrsteilnehmer und Verkehrsteilnehmerinnen einhergeht.

Weiters kann vorgesehen sein, dass die Transistoren des Hilfsstranges als npn-Bipolartransistoren ausgebildet sind, wobei zwischen den Transistoren jeweils ein ohmscher Widerstand in Serie geschaltet ist und bei jedem Überwachungspaar die Kopplung zwischen Lichtquelle und Transistor erfolgt, indem die Anode der Lichtquelle mit der Basis des Transistors verbunden ist und die Kathode der Lichtquelle mit dem Emitter des Transistors verbunden ist, wobei jene Verbindungen, die von zwischen Lichtquellen liegenden Verbindungspunkten ausgehen, jeweils mit einer den Leistungsfluss zwischen Leistungsstrang und Hilfsstrang festlegenden Diode versehen sind, wobei die Flussrichtung der Dioden hierzu in Richtung des Hilfsstrangs in Form des Transistors des jeweiligen Überwachungspaares geschaltet ist, wobei der Hauptschalter als selbstsperrender p-Kanal MOSFET ausgebildet ist, der sourceseitig mit dem Spannungseingang, drainseitig mit dem Leistungsstrang und gateseitig mit einem spannungseingangsseitigen Ende des Hilfsstrangs elektrisch verbunden ist. Dadurch wird eine zuverlässige und kostengünstig umsetzbare kurzschlussfehlererkennende Beleuchtungsvorrichtung geschaffen. In einer Weiterbildung dazu kann vorgesehen sein, dass das spannungseingangsseitige Ende des Hilfsstranges über einen ohmschen Hilfswiderstand mit dem Spannungseingang verbunden ist und ein masseseitiges Ende des Hilfsstranges mit dem Masseanschluss verbunden ist, wobei zwischen dem Hilfsstrang und dem ohmschen Hilfswiderstand ein Knotenpunkt ausgebildet ist, der mit dem Gate des Hauptschalters dergestalt verbunden ist, dass im Falle eines Sperrens des Hilfsstrangs das Potential des Knotenpunktes so verändert wird, dass der Hauptschalter sperrt und im Falle des Leitens des Hilfsstrangs das Potential des Knotenpunkts so verändert wird, dass der Hauptschalter leitet.

Alternativ dazu kann vorgesehen sein, dass die Transistoren des Hilfsstranges als selbstsperrende MOSFET-Transistoren ausgebildet sind. Dabei kann in einer Weiterbildung vorgesehen sein, dass die Transistoren des Hilfsstranges als selbstsperrende n-Kanal MOSFETS ausgebildet sind, wobei zwischen den Transistoren jeweils ein ohmscher Widerstand in Serie geschaltet ist und bei jedem Überwachungspaar die Kopplung zwischen Lichtquelle und Transistor erfolgt, indem die Anode der Lichtquelle mit dem Gate des Transistors direkt verbunden ist und die Kathode der Lichtquelle mit dem Drain des Transistors verbunden ist, wobei jene Kathodenverbindungen, die von zwischen Lichtquellen liegenden Verbindungspunkten ausgehen, jeweils mit einer den Leistungsfluss zwischen Leistungsstrang und Hilfsstrang festlegenden Diode versehen sind, wobei die Flussrichtung der Dioden hierzu in Richtung des Hilfsstrangs in Form des Transistors des jeweiligen Überwachungspaares geschaltet ist, wobei der Hauptschalter als selbstsperrender p-Kanal MOSFET ausgebildet ist, der sourceseitig mit dem Spannungseingang, drainseitig mit dem Leistungsstrang und gateseitig mit einem spannungseingangsseitigen Ende des Hilfsstrangs elektrisch verbunden ist.

Weiters kann vorgesehen sein, dass das spannungseingangsseitige Ende des Hilfsstranges über einen ohmschen Hilfswiderstand mit dem Spannungseingang verbunden ist und ein masseseitiges Ende des Hilfsstranges mit dem Masseanschluss verbunden ist, wobei zwischen dem Hilfsstrang und dem ohmschen Hilfswiderstand ein Knotenpunkt ausgebildet ist, der mit dem Gate des Hauptschalters dergestalt verbunden ist, dass im Falle eines Sperrens des Hilfsstrangs das Potential des Knotenpunktes so verändert wird, dass der Hauptschalter sperrt und im Falle des Leitens des Hilfsstrangs das Potential des Knotenpunkts so verändert wird, dass der Hauptschalter leitet.

Alternativ dazu kann vorgesehen sein, dass die Transistoren des Hilfsstranges als selbstsperrende p-Kanal MOSFETS ausgebildet sind, wobei zwischen den Transistoren jeweils ein ohmscher Widerstand in Serie geschaltet ist und bei jedem Überwachungspaar die Kopplung zwischen Lichtquelle und Transistor erfolgt, indem die Anode der Lichtquelle mit der Source des Transistors verbunden ist und die Kathode der Lichtquelle mit dem Gate des Transistors verbunden ist, wobei jene Anodenverbindungen, die von zwischen Lichtquellen liegenden Verbindungspunkten ausgehen, jeweils mit einer den Leistungsfluss zwischen Leistungsstrang und Hilfsstrang festlegenden Diode versehen sind, wobei die Flussrichtung der Dioden hierzu in Richtung des Leistungsstrangs geschaltet ist, wobei der Hauptschalter als selbstsperrender n-Kanal MOSFET ausgebildet ist, der sourceseitig mit dem Masseanschluss, drainseitig mit dem Leistungsstrang und gateseitig mit einem masseanschlussseitigen Ende des Hilfsstrangs elektrisch verbunden ist. Unter dem Ausdruck "Anodenverbindungen" werden dabei jene Verbindungen verstanden, die von der Anode der jeweiligen Lichtquelle zu dem jeweiligen Transistor führen. In einer Weiterbildung kann dabei vorgesehen sein, dass das masseanschlussseitige Ende des Hilfsstranges über einen ohmschen Hilfswiderstand mit dem Masseanschluss verbunden ist und ein spannungseingangsseitiges Ende des Hilfsstranges mit dem Spannungseingang direkt verbunden ist, wobei zwischen dem Hilfsstrang und dem ohmschen Hilfswiderstand ein Knotenpunkt ausgebildet ist, der mit dem Gate des Hauptschalters dergestalt verbunden ist, dass im Falle eines Sperrens des Hilfsstrangs das Potential des Knotenpunktes so verändert wird, dass der Hauptschalter sperrt und im Falle des Leitens des Hilfsstrangs das Potential des Knotenpunkts so verändert wird, dass der Hauptschalter leitet.

Weiters betrifft die Erfindung einen Fahrzeugscheinwerfer umfassend eine erfindungsgemäße Beleuchtungsvorrichtung.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung einer ersten Ausführungsform der Erfindung,
Figur 2 eine schematische Darstellung einer zweiten Ausführungsform der Erfindung,
Figur 3 eine schematische Darstellung einer nichterfindungsgemäßen Ausführungsform,
Figur 4 eine schematische Darstellung einer nichterfindungsgemäßen Ausführungsform,
Figur 5 eine schematische Darstellung einer fünften Ausführungsform der Erfindung, und
Figur 6 eine schematische Darstellung einer sechsten Ausführungsform der Erfindung.

In den folgenden Figuren bezeichnen - sofern nicht anders angegeben - gleiche Bezugszeichen gleiche Merkmale.

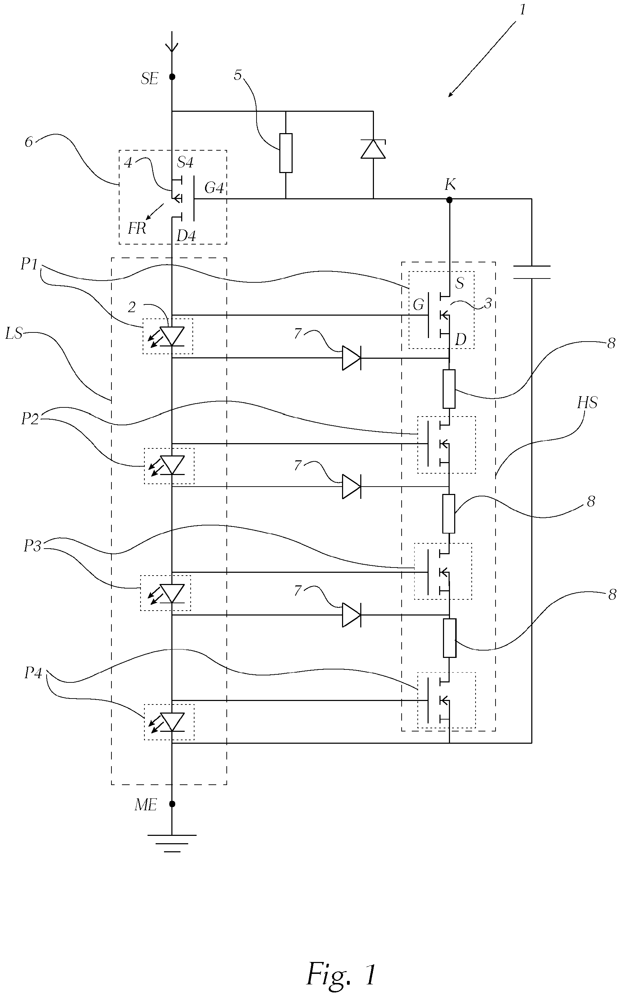

Figuren 1 bis 6 zeigen eine kurzschlussfehlererkennende Beleuchtungsvorrichtung 1 für einen Kraftfahrzeugscheinwerfer, umfassend einen Spannungseingang SE und einen Anschluss ME zur Verbindung mit Massepotential. Die Beleuchtungsvorrichtung 1 umfasst weiters einen über den Spannungseingang SE versorgten Leistungsstrang LS, der eine Anzahl an zu überwachenden Lichtquellen 2 umfasst, wobei die Lichtquellen 2 zur Abgabe des Lichts der Beleuchtungsvorrichtung 1 eingerichtet sind und die Lichtquellen 2 innerhalb des Leistungsstrangs LS miteinander in Serie geschaltet sind.

Die Beleuchtungsvorrichtung 1 weist weiters einen Hilfsstrang HS mit darin angeordneten, in Serie zueinander geschalteten, Transistoren 3 auf. Jeder Lichtquelle 2 des Leistungsstrangs LS ist einer der Transistoren 3 zugeordnet. Dadurch wird jeweils ein Überwachungspaar P1, P2, P3 bzw. P4 ausgebildet, das aus einer zu überwachenden Lichtquelle 2 und einem zur Überwachung derselbigen zugeordneten Transistors 3 besteht. Zur besseren Übersicht sind nur die Lichtquelle und der Transistor des ersten Überwachungspaares P1 mit einem Bezugszeichen versehen.

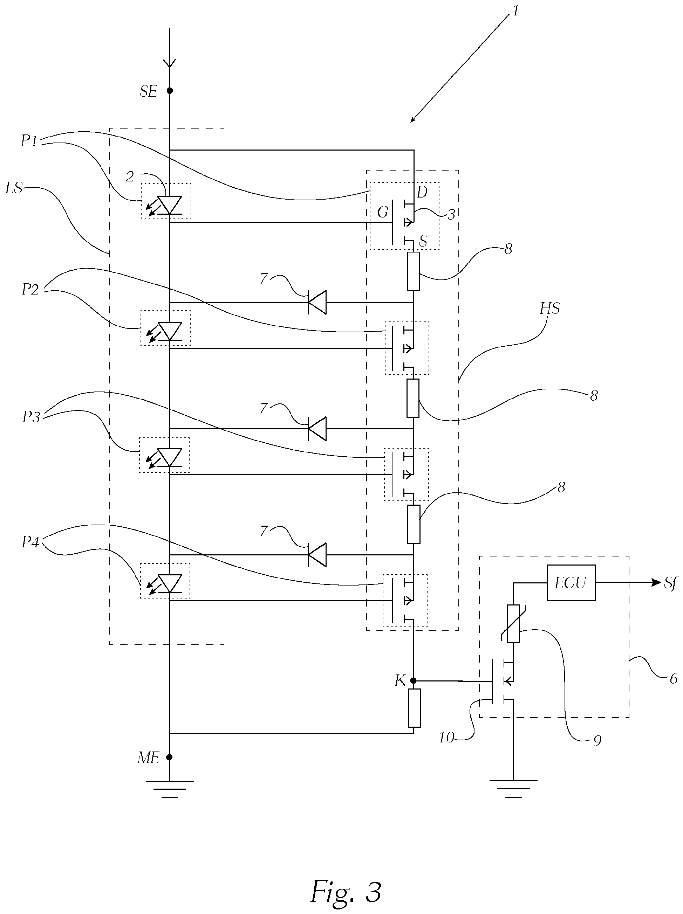

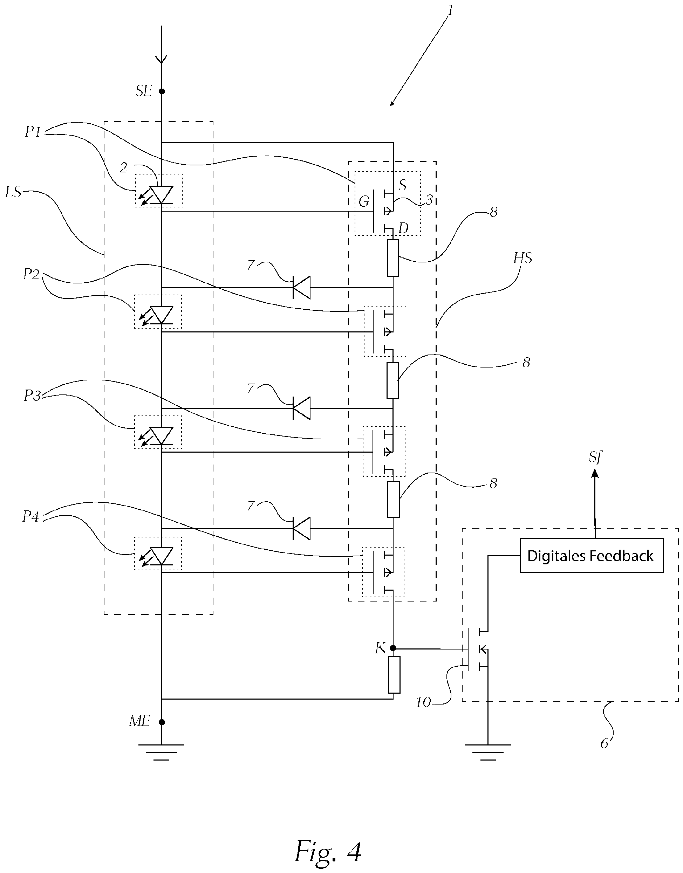

Bei jedem Überwachungspaar ist der Transistor 3 mit der Kathode und Anode der zugehörigen Lichtquelle 2 dergestalt gekoppelt, dass die im Normalbetrieb an der Lichtquelle 2 abfallende Spannung dazu herangezogen wird, den Transistor 3 durchzuschalten. Im Kurzschlussfall der Lichtquelle 2 hingegen wird der durch den Kurzschluss verursachte Spannungseinbruch zu einem Sperren des Transistors 3 und damit zur Unterbrechung des Stromflusses des Hilfsstranges HS genutzt. Zudem ist eine mit dem Hilfsstrang HS gekoppelte Fehlererkennungsvorrichtung 6 vorgesehen, die dazu eingerichtet ist, im Falle des Sperrens des Hilfsstranges HS ein Fehlersignal S_{F} (siehe Fig. 3 und 4) auszugeben oder eine Fehlerroutine FR (siehe verbleibende Figuren) auszulösen.

Die Ausführungsformen nach Figuren 1, 2, 5 und 6 haben gemein, dass die Fehlererkennungsvorrichtung 6 zur Durchführung einer Fehlerroutine FR eingerichtet ist, in der der Betrieb der Lichtquellen 2 im Falle der Erkennung eines Fehlers selbständig abgeschaltet wird. Hierzu ist vorgesehen, dass sich sowohl der Leistungsstrang LS als auch der Hilfsstrang HS zwischen dem Spannungseingang SE und dem Masseanschluss ME erstrecken und die Fehlererkennungsvorrichtung 6 als ein Hauptschalter 4 ausgebildet ist. Dieser Hauptschalter 4 ist in Serie zu dem Leistungsstrang LS angeordnet und dergestalt mit dem Hilfsstrang HS gekoppelt, dass im Falle eines Durchschaltens des Hilfsstranges HS der Hauptschalter 4 elektrisch leitet und im Falle eines Sperrens des Hilfsstranges HS elektrisch sperrt.

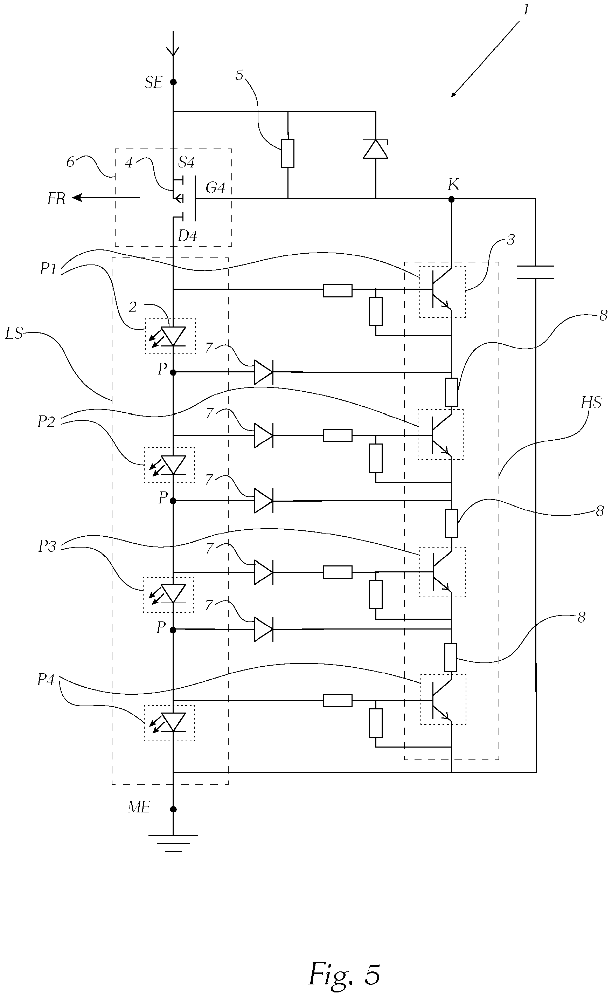

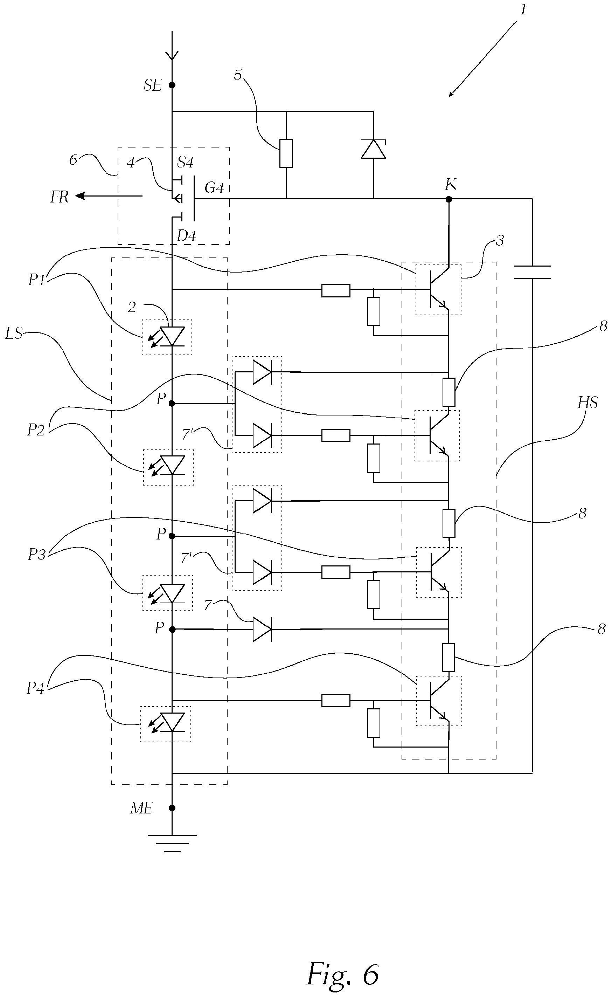

In den Ausführungsformen gemäß Fig. 5 und 6 ist zudem vorgesehen, dass die Transistoren 3 des Hilfsstranges HS als npn-Bipolartransistoren ausgebildet sind. Zwischen den Transistoren 3 ist jeweils ein ohmscher Widerstand in Serie geschaltet. Bei jedem Überwachungspaar P1, P2, P3 bzw. P4 erfolgt die Kopplung zwischen Lichtquelle 2 und Transistor 3, indem die Anode der Lichtquelle 2 mit der Basis des Transistors 3 verbunden ist und die Kathode der Lichtquelle 2 mit dem Emitter des Transistors 3 verbunden ist. Jene Verbindungen, die von, zwischen Lichtquellen 2 liegenden Verbindungspunkten P, ausgehen, sind jeweils mit einer den Leistungsfluss zwischen Leistungsstrang LS und Hilfsstrang HS festlegenden Diode 7 versehen. Darunter wird verstanden, dass die Durchlassrichtung der Diode 7 so gewählt ist, dass der Leistungsfluss in eine Richtung entsprechend festgelegt wird. Die Flussrichtung der Dioden 7 ist hierzu in Richtung des Hilfsstrangs HS orientiert, nämlich hin zu den Transistoren 3 des jeweiligen Überwachungspaares P1, P2, P3, P4. Der Hauptschalter 4 ist als selbstsperrender p-Kanal MOSFET ausgebildet, der sourceseitig S4 mit dem Spannungseingang SE, drainseitig D4 mit dem Leistungsstrang LS und gateseitig G4 mit einem spannungseingangsseitigen Ende des Hilfsstrangs HS elektrisch verbunden ist. Figur 6 unterscheidet sich von Figur 5 durch die Verwendung sogenannter Doppeldioden 7', die besonders kostengünstig erhältlich sind.

Weiters ist in der Ausführungsform gemäß Figuren 5 und 6 vorgesehen, dass das spannungseingangsseitige Ende des Hilfsstranges HS über einen ohmschen Hilfswiderstand 5 mit dem Spannungseingang SE verbunden ist und ein masseseitiges Ende des Hilfsstranges HS mit dem Masseanschluss ME verbunden ist, wobei zwischen dem Hilfsstrang HS und dem ohmschen Hilfswiderstand 5 ein Knotenpunkt K ausgebildet ist, der mit dem Gate G4 des Hauptschalters 4 dergestalt verbunden ist, dass im Falle eines Sperrens des Hilfsstrangs HS das Potential des Knotenpunktes K so verändert wird, dass der Hauptschalter 4 sperrt und im Falle des Leitens des Hilfsstrangs HS das Potential des Knotenpunkts K so verändert wird, dass der Hauptschalter 4 leitet.

Die Ausführungsformen gemäß Figuren 1 bis 4 haben gemein, dass die Transistoren 3 des Hilfsstranges HS als selbstsperrende MOSFET-Transistoren ausgebildet sind.

In der Ausführungsform nach Figur 1 sind die Transistoren 3 des Hilfsstranges HS als selbstsperrende n-Kanal MOSFETS ausgebildet, wobei zwischen den Transistoren 3 jeweils ein ohmscher Widerstand 8 in Serie geschaltet ist und bei jedem Überwachungspaar P1, P2, P3, P4 die Kopplung zwischen Lichtquelle 2 und Transistor 3 erfolgt, indem die Anode der Lichtquelle 2 mit dem Gate des Transistors 3 direkt verbunden ist und die Kathode der Lichtquelle 2 mit dem Drain des Transistors 3 verbunden ist, wobei jene Kathodenverbindungen, die von zwischen Lichtquellen 2 liegenden Verbindungspunkten P ausgehen, jeweils mit einer den Leistungsfluss zwischen Leistungsstrang LS und Hilfsstrang HS festlegenden Diode versehen sind, wobei die Flussrichtung der Dioden hierzu in Richtung des Hilfsstrangs HS in Form des Transistors 3 des jeweiligen Überwachungspaares P1, P2, P, P4 geschaltet ist, wobei der Hauptschalter 4 als selbstsperrender p-Kanal MOSFET ausgebildet ist, der sourceseitig mit dem Spannungseingang SE, drainseitig mit dem Leistungsstrang LS und gateseitig mit einem spannungseingangsseitigen Ende des Hilfsstrangs HS elektrisch verbunden ist. Im Detail kann in der Ausführungsform nach Fig. 1 vorgesehen sein, dass das spannungseingangsseitige Ende des Hilfsstranges HS über einen ohmschen Hilfswiderstand 5 mit dem Spannungseingang SE verbunden ist und ein masseseitiges Ende des Hilfsstranges HS mit dem Masseanschluss ME verbunden ist, wobei zwischen dem Hilfsstrang HS und dem ohmschen Hilfswiderstand 5 ein Knotenpunkt K ausgebildet ist, der mit dem Gate G4 des Hauptschalters 4 dergestalt verbunden ist, dass im Falle eines Sperrens des Hilfsstrangs HS das Potential des Knotenpunktes K so verändert wird, dass der Hauptschalter 4 sperrt und im Falle des Leitens des Hilfsstrangs HS das Potential des Knotenpunkts K so verändert wird, dass der Hauptschalter 4 leitet. Auf diese Weise wird der Leistungsstrang LS automatisch abgeschaltet, sobald ein Kurzschluss einer Lichtquelle 2 vorliegt.

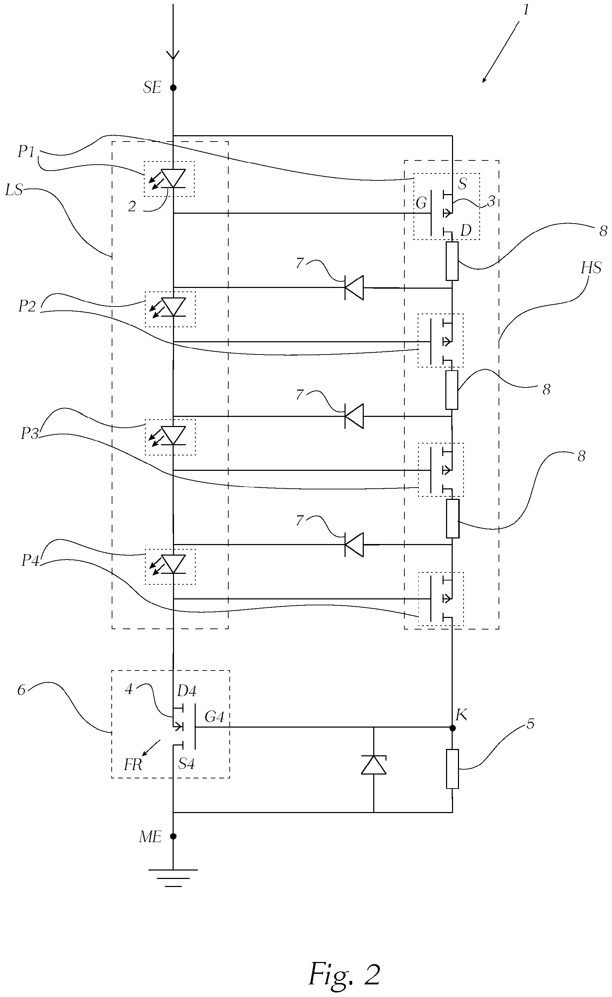

In Fig. 2 sind die Transistoren 3 des Hilfsstranges HS als selbstsperrende p-Kanal MOSFETS ausgebildet, wobei zwischen den Transistoren 3 jeweils ein ohmscher Widerstand in Serie geschaltet ist und bei jedem Überwachungspaar P1, P2, P3, P4 die Kopplung zwischen Lichtquelle 2 und Transistor 3 erfolgt, indem die Anode der Lichtquelle 2 mit der Source des Transistors 3 verbunden ist und die Kathode der Lichtquelle 2 mit dem Gate des Transistors 3 verbunden ist, wobei jene Anodenverbindungen, die von zwischen Lichtquellen 2 liegenden Verbindungspunkten P ausgehen, jeweils mit einer den Leistungsfluss zwischen Leistungsstrang LS und Hilfsstrang HS festlegenden Diode versehen sind, wobei die Flussrichtung der Dioden hierzu in Richtung des Leistungsstrangs LS geschaltet ist, wobei der Hauptschalter 4 als selbstsperrender n-Kanal MOSFET ausgebildet ist, der sourceseitig mit dem Masseanschluss ME, drainseitig mit dem Leistungsstrang LS und gateseitig mit einem masseanschlussseitigen Ende des Hilfsstrangs HS elektrisch verbunden ist. Im Detail kann dabei vorgesehen sein, dass das masseanschlussseitige Ende des Hilfsstranges HS über einen ohmschen Hilfswiderstand 5 mit dem Masseanschluss ME verbunden ist und ein spannungseingangsseitiges Ende des Hilfsstranges HS mit dem Spannungseingang SE direkt verbunden ist, wobei zwischen dem Hilfsstrang HS und dem ohmschen Hilfswiderstand 5 ein Knotenpunkt K ausgebildet ist, der mit dem Gate G4 des Hauptschalters 4 dergestalt verbunden ist, dass im Falle eines Sperrens des Hilfsstrangs HS das Potential des Knotenpunktes K so verändert wird, dass der Hauptschalter 4 sperrt und im Falle des Leitens des Hilfsstrangs HS das Potential des Knotenpunkts K so verändert wird, dass der Hauptschalter 4 leitet.

Die Ausführungsformen gemäß Fig. 3 und 4 haben gemein, dass die Transistoren 3 des Hilfsstranges HS als selbstsperrende p-Kanal MOSFETs ausgebildet sind, wobei zwischen den Transistoren 3 jeweils ein ohmscher Widerstand in Serie geschaltet ist und bei jedem Überwachungspaar die Kopplung zwischen Lichtquelle 2 und Transistor 3 erfolgt, indem die Anode der Lichtquelle 2 mit der Source des Transistors 3 verbunden ist und die Kathode der Lichtquelle 2 mit dem Gate des Transistors 3 verbunden ist, wobei jene Anodenverbindungen, die von zwischen Lichtquellen 2 liegenden Verbindungspunkten P ausgehen, jeweils mit einer den Leistungsfluss zwischen Leistungsstrang LS und Hilfsstrang HS festlegenden Diode versehen sind, wobei die Flussrichtung der Dioden hierzu in Richtung des Leistungsstrangs LS geschaltet ist, wobei ein masseanschlussseitiges Ende des Hilfsstranges HS über einen ohmschen Hilfswiderstand 5 mit dem Masseanschluss ME verbunden ist und ein spannungseingangsseitiges Ende des Hilfsstranges HS mit dem Spannungseingang SE direkt verbunden ist, wobei zwischen dem Hilfsstrang HS und dem ohmschen Hilfswiderstand 5 ein Knotenpunkt K ausgebildet ist, und die Fehlererkennungsvorrichtung 6 mit diesem Knotenpunkt K elektrisch verbunden ist und somit eine, durch ein Sperren oder Leiten des Hilfsstranges HS bedingte, Potentialänderung des Knotenpunktes K erfasst und in Abhängigkeit davon ein Fehlersignal ausgibt.

In der Ausführungsform gemäß Figur 3 ist zudem vorgesehen, dass die Fehlererkennungsvorrichtung einen Hilfstransistor 10 umfasst, der in Abhängigkeit von dem Potential des Knotenpunktes durchgesteuert wird, wobei der Hilfstransistor 10 mit einer elektrischen Steuereinheit (ECU) über einen temperaturabhängigen Widerstand 9 verbunden ist, wobei die elektrische Steuereinheit (ECU) den Schaltzustand des Hilfstransistors 10 erfasst und in Abhängigkeit davon ein Fehlersignal ausgibt. Der temperaturabhängige Widerstand 9 kann z.B. von einem bestehenden Beleuchtungsvorrichtungsüberwachungssystem stammen, z.B. einem Temperaturüberwachungssystem. So ist es z.B. üblich, die Lichtquellen 2 an einen Kühlkörper zu befestigen und die Temperatur des Kühlkörpers über einen mit einer ECU verschalteten temperaturabhängigen Widerstand 9 zu erfassen. In Abhängigkeit von der gemessenen Temperatur kann der Strom gesteuert werden. So kann z.B. vorgesehen sein, dass ab einer Temperatur von 110°C der Ist-Strom gegenüber den Nennstrom reduziert wird und z.B. bei einer Temperatur von 130°C nur mehr die Hälfte des Nennstromes erreicht, um eine weitere Erwärmung zu vermeiden oder zumindest zu verlangsamen. Eine solche Temperaturüberwachungsvorrichtung kann Teil der vorliegenden Beleuchtungsvorrichtung sein und damit mit der Kurzschlusserkennung kombiniert werden, indem auf den temperaturabhängigen Widerstand und die bereits für die Temperaturüberwachung vorgesehene ECU zurückgegriffen wird. Wird ein Kurzschluss erfasst, so schaltet der Hilfstransistor 10 ab und sorgt dafür, dass der für die Temperaturmessung z.B. einer Leiterplatte oder eines Kühlkörpers vorgesehene temperaturabhängige Widerstand (z.B. in Form eines NTCs) über die Temperaturmessung hinaus für einen zweiten Zweck eingesetzt - nämlich auf "open load" geschaltet - wird, welcher in der nachgeordneten ECU Fehlerroutinen auslösen kann.

In Fig. 4 ist vorgesehen, dass die Fehlererkennungsvorrichtung 6 einen Hilfstransistor 10 umfasst, der in Abhängigkeit von dem Potential des Knotenpunktes K durchgesteuert wird, wobei der Schaltzustand des Hilfstransistors 10 zur Ausgabe eines binären Fehlersignals herangezogen wird.

Die Erfindung betrifft weiters einen in den Figuren nicht dargestellten Fahrzeugscheinwerfer.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Kurzschlussfehlererkennende Beleuchtungsvorrichtung (1) für einen Kraftfahrzeugscheinwerfer, umfassend
- einen Spannungseingang (SE) und einen Anschluss (ME) zur Verbindung mit Massepotential,
- einen über den Spannungseingang (SE) versorgten Leistungsstrang (LS), der eine Anzahl an zu überwachenden Lichtquellen (2) umfasst, wobei diese Anzahl zumindest zwei beträgt, wobei die Lichtquellen (2) zur Abgabe des Lichts der Beleuchtungsvorrichtung (1) eingerichtet sind und die Lichtquellen (2) innerhalb des Leistungsstrangs (LS) miteinander in Serie geschaltet sind,
wobei die Beleuchtungsvorrichtung (1) weiters
- einen Hilfsstrang (HS) mit darin angeordneten, in Serie zueinander geschalteten, Transistoren (3) aufweist, wobei jeder Lichtquelle (2) des Leistungsstrangs (LS) einer der Transistoren (3) zugeordnet ist, und damit ein Überwachungspaar (P1, P2, P3, P4), bestehend aus einer zu überwachenden Lichtquelle (2) und einem zur Überwachung zugeordneten Transistor (3), gebildet wird, wobei jeder Transistor (3) mit der Kathode und Anode der Lichtquelle (2) dergestalt gekoppelt ist, dass die im Normalbetrieb an der Lichtquelle (2) abfallende Spannung dazu herangezogen wird, den Transistor (3) durchzuschalten, und im Kurzschlussfall der Lichtquelle (2) der durch den Kurzschluss verursachte Spannungseinbruch zu einem Sperren des Transistors (3) und damit des Hilfsstranges (HS) führt, wobei die kurzschlussfehlererkennende Beleuchtungsvorrichtung (1) weiters eine mit dem Hilfsstrang (HS) gekoppelte Fehlererkennungsvorrichtung (6) aufweist, die dazu eingerichtet ist, im Falle des Sperrens des Hilfsstranges ein Fehlersignal (S_{F}) auszugeben oder eine Fehlerroutine (FR) auszulösen,
**dadurch gekennzeichnet, dass** die
Fehlererkennungsvorrichtung (6) zur Durchführung einer Fehlerroutine (FR) eingerichtet ist, in der der Betrieb der Lichtquellen (2) im Falle der Erkennung eines Fehlers selbständig abgeschaltet wird, wobei hierzu vorgesehen ist, dass sich sowohl der Leistungsstrang (LS) als auch der Hilfsstrang (HS) zwischen dem Spannungseingang (SE) und dem Masseanschluss (ME) erstrecken und die Fehlererkennungsvorrichtung (6) als ein Hauptschalter (4) ausgebildet ist, der in Serie zu dem Leistungsstrang (LS) angeordnet und dergestalt mit dem Hilfsstrang (HS) gekoppelt ist, sodass im Falle eines Durchschaltens des Hilfsstranges (HS) der Hauptschalter (4) elektrisch leitet und im Falle eines Sperrens des Hilfsstranges (HS) elektrisch sperrt.

2. Beleuchtungsvorrichtung (1) nach Anspruch 1, wobei die Transistoren (3) des Hilfsstranges (HS) als npn-Bipolartransistoren ausgebildet sind, wobei zwischen den Transistoren (3) jeweils ein ohmscher Widerstand in Serie geschaltet ist und bei jedem Überwachungspaar (P1, P2, P3, P4) die Kopplung zwischen Lichtquelle (2) und Transistor (3) erfolgt, indem die Anode der Lichtquelle (2) mit der Basis des Transistors verbunden ist und die Kathode der Lichtquelle (2) mit dem Emitter des Transistors (3) verbunden ist, wobei jene Verbindungen, die von zwischen Lichtquellen (2) liegenden Verbindungspunkten (P) ausgehen, jeweils mit einer den Leistungsfluss zwischen Leistungsstrang (LS) und Hilfsstrang (HS) festlegenden Diode (7) versehen sind, wobei die Flussrichtung der Dioden (7) hierzu in Richtung des Hilfsstrangs in Form des Transistors (3) des jeweiligen Überwachungspaares (P1, P2, P3, P4) geschaltet ist, wobei der Hauptschalter (4) als selbstsperrender p-Kanal MOSFET ausgebildet ist, der sourceseitig (S4) mit dem Spannungseingang (SE), drainseitig (D4) mit dem Leistungsstrang (LS) und gateseitig (G4) mit einem spannungseingangsseitigen Ende des Hilfsstrangs (HS) elektrisch verbunden ist.

3. Beleuchtungsvorrichtung (1) nach Anspruch 2, wobei das spannungseingangsseitige Ende des Hilfsstranges (HS) über einen ohmschen Hilfswiderstand (5) mit dem Spannungseingang verbunden ist und ein masseseitiges Ende des Hilfsstranges mit dem Masseanschluss (ME) verbunden ist, wobei zwischen dem Hilfsstrang (HS) und dem ohmschen Hilfswiderstand (5) ein Knotenpunkt (K) ausgebildet ist, der mit dem Gate (G4) des Hauptschalters (4) dergestalt verbunden ist, dass im Falle eines Sperrens des Hilfsstrangs (HS) das Potential des Knotenpunktes (K) so verändert wird, dass der Hauptschalter (4) sperrt und im Falle des Leitens des Hilfsstrangs (HS) das Potential des Knotenpunkts (K) so verändert wird, dass der Hauptschalter (4) leitet.

4. Beleuchtungsvorrichtung (1) nach Anspruch 1, wobei die Transistoren (3) des Hilfsstranges (HS) als selbstsperrende MOSFET-Transistoren ausgebildet sind.

5. Beleuchtungsvorrichtung (1) nach Anspruch 4, wobei die Transistoren (3) des Hilfsstranges (HS) als selbstsperrende n-Kanal MOSFETS ausgebildet sind, wobei zwischen den Transistoren (3) jeweils ein ohmscher Widerstand (8) in Serie geschaltet ist und bei jedem Überwachungspaar (P1, P2, P3, P4) die Kopplung zwischen Lichtquelle (2) und Transistor (3) erfolgt, indem die Anode der Lichtquelle (2) mit dem Gate des Transistors (3) direkt verbunden ist und die Kathode der Lichtquelle (2) mit dem Drain des Transistors (3) verbunden ist, wobei jene Kathodenverbindungen, die von zwischen Lichtquellen (2) liegenden Verbindungspunkten (P) ausgehen, jeweils mit einer den Leistungsfluss zwischen Leistungsstrang (LS) und Hilfsstrang (HS) festlegenden Diode versehen sind, wobei die Flussrichtung der Dioden hierzu in Richtung des Hilfsstrangs (HS) in Form des Transistors (3) des jeweiligen Überwachungspaares (P1, P2, P, P4) geschaltet ist, wobei der Hauptschalter (4) als selbstsperrender p-Kanal MOSFET ausgebildet ist, der sourceseitig mit dem Spannungseingang (SE), drainseitig mit dem Leistungsstrang und gateseitig mit einem spannungseingangsseitigen Ende des Hilfsstrangs elektrisch verbunden ist.

6. Beleuchtungsvorrichtung (1) nach Anspruch 5, wobei das spannungseingangsseitige Ende des Hilfsstranges (HS) über einen ohmschen Hilfswiderstand (5) mit dem Spannungseingang (SE) verbunden ist und ein masseseitiges Ende des Hilfsstranges (HS) mit dem Masseanschluss (ME) verbunden ist, wobei zwischen dem Hilfsstrang (HS) und dem ohmschen Hilfswiderstand (5) ein Knotenpunkt (K) ausgebildet ist, der mit dem Gate (G4) des Hauptschalters (4) dergestalt verbunden ist, dass im Falle eines Sperrens des Hilfsstrangs (HS) das Potential des Knotenpunktes (K) so verändert wird, dass der Hauptschalter (4) sperrt und im Falle des Leitens des Hilfsstrangs (HS) das Potential des Knotenpunkts (K) so verändert wird, dass der Hauptschalter (4) leitet.

7. Beleuchtungsvorrichtung (1) nach Anspruch 4, wobei die Transistoren (3) des Hilfsstranges (HS) als selbstsperrende p-Kanal MOSFETS ausgebildet sind, wobei zwischen den Transistoren (3) jeweils ein ohmscher Widerstand in Serie geschaltet ist und bei jedem Überwachungspaar die Kopplung zwischen Lichtquelle (2) und Transistor (3) erfolgt, indem die Anode der Lichtquelle (2) mit der Source des Transistors (3) verbunden ist und die Kathode der Lichtquelle (2) mit dem Gate des Transistors (3) verbunden ist, wobei jene Anodenverbindungen, die von zwischen Lichtquellen (2) liegenden Verbindungspunkten (P) ausgehen, jeweils mit einer den Leistungsfluss zwischen Leistungsstrang (LS) und Hilfsstrang (HS) festlegenden Diode versehen sind, wobei die Flussrichtung der Dioden hierzu in Richtung des Leistungsstrangs (LS) geschaltet ist, wobei der Hauptschalter (4) als selbstsperrender n-Kanal MOSFET ausgebildet ist, der sourceseitig mit dem Masseanschluss (ME), drainseitig mit dem Leistungsstrang (LS) und gateseitig mit einem masseanschlussseitigen Ende des Hilfsstrangs (HS) elektrisch verbunden ist.

8. Beleuchtungsvorrichtung (1) nach Anspruch 7, wobei das masseanschlussseitige Ende des Hilfsstranges (HS) über einen ohmschen Hilfswiderstand (5) mit dem Masseanschluss (ME) verbunden ist und ein spannungseingangsseitiges Ende des Hilfsstranges (HS) mit dem Spannungseingang (SE) direkt verbunden ist, wobei zwischen dem Hilfsstrang (HS) und dem ohmschen Hilfswiderstand (5) ein Knotenpunkt (K) ausgebildet ist, der mit dem Gate (G4) des Hauptschalters (4) dergestalt verbunden ist, dass im Falle eines Sperrens des Hilfsstrangs (HS) das Potential des Knotenpunktes (K) so verändert wird, dass der Hauptschalter (4) sperrt und im Falle des Leitens des Hilfsstrangs (HS) das Potential des Knotenpunkts (K) so verändert wird, dass der Hauptschalter (4) leitet.

9. Fahrzeugscheinwerfer umfassend eine Beleuchtungsvorrichtung nach einem der vorhergehenden Ansprüche 1 bis 8.

## Claims

1. Short-circuit fault-detecting lighting device (1) for a motor vehicle headlight, comprising
- a voltage input (SE) and a connector (ME) for connection to earth potential,
- a power line (LS) which is supplied via the voltage input (SE) and comprises a number of light sources (2) to be monitored, this number being at least two, the light sources (2) being set up to emit the light of the lighting device (1) and the light sources (2) being connected in series with one another within the power line (LS),
wherein the lighting device (1) further comprises
- has an auxiliary line (HS) with transistors (3) arranged therein and connected in series with one another, one of the transistors (3) being assigned to each light source (2) of the power line (LS), and thus a monitoring pair (P1, P2, P3, P4), consisting of a light source (2) to be monitored and a transistor (3) assigned for monitoring, each transistor (3) being coupled to the cathode and anode of the light source (2) in such a way that the voltage dropping across the light source (2) during normal operation is used for this purpose, the transistor (3) is switched through, and in the event of a short circuit of the light source (2), the voltage dip caused by the short circuit leads to a blocking of the transistor (3) and thus of the auxiliary line (HS), the short-circuit fault-detecting lighting device (1) furthermore having a fault detection device (6) which is coupled to the auxiliary line (HS) and is set up to output a fault signal (SF) or to trigger a fault routine (FR) in the event of the auxiliary line being blocked,
**characterized in that** the
fault detection device (6) is set up for carrying out a fault routine (FR) in which the operation of the light sources (2) is switched off automatically in the event of a fault being detected, it being provided for this purpose that both the power line (LS) and the auxiliary line (HS) extend between the voltage input (SE) and the connector (ME) and the fault detection device (6) is designed as a main switch (4) which is arranged in series with the power line (LS) and is coupled to the auxiliary line (HS) in such a way that the main switch (4) conducts electrically when the auxiliary line (HS) is switched through and blocks electrically when the auxiliary line (HS) is blocked.

2. Lighting device (1) according to claim 1, wherein the transistors (3) of the auxiliary line (HS) are designed as npn bipolar transistors, wherein an ohmic resistor is connected in series between the transistors (3) in each case and for each monitoring pair (P1, P2, P3, P4), the coupling between light source (2) and transistor (3) is effected by the anode of the light source (2) being connected to the base of the transistor and the cathode of the light source (2) being connected to the emitter of the transistor (3), wherein those connections which originate from connection points (P) located between light sources (2), are each provided with a diode (7) which determines the power flow between the power line (LS) and the auxiliary line (HS), the flow direction of the diodes (7) being connected for this purpose in the direction of the auxiliary line in the form of the transistor (3) of the respective monitoring pair (P1, P2, P3, P4), wherein the main switch (4) is designed as a self-locking p-channel MOSFET which is electrically connected on the source side (S4) to the voltage input (SE), on the drain side (D4) to the power line (LS) and on the gate (G4) to a voltage input end of the auxiliary line (HS).

3. Lighting device (1) according to claim 2, wherein the voltage input-side end of the auxiliary line (HS) is connected to the voltage input via an ohmic auxiliary resistor (5) and a ground-side end of the auxiliary line is connected to the connector (ME), wherein a node (K) is formed between the auxiliary line (HS) and the ohmic auxiliary resistor (5), which is connected to the gate (G4) of the main switch (4) in such a way that when the auxiliary line (HS) is blocked, the potential of the node (K) is changed in such a way that the main switch (4) blocks and when the auxiliary line (HS) conducts, the potential of the node (K) is changed in such a way that the main switch (4) conducts.

4. Lighting device (1) according to claim 1, wherein the transistors (3) of the auxiliary line (HS) are designed as self-locking MOSFET transistors.

5. Lighting device (1) according to claim 4, wherein the transistors (3) of the auxiliary line (HS) are designed as self-locking n-channel MOSFETS, wherein an ohmic resistor (8) is connected in series between the transistors (3) in each case and, for each monitoring pair (P1, P2, P3, P4), the coupling between the light source (2) and the transistor (3) is effected by the anode of the light source (2) being directly connected to the gate of the transistor (3) and the cathode of the light source (2) being connected to the drain of the transistor (3), wherein those cathode connections which are made between light sources (2) and transistors (3) are connected in series, which emanate from connection points (P) located between light sources (2) are each provided with a diode defining the power flow between the power line (LS) and the auxiliary line (HS), the direction of flow of the diodes for this purpose being in the direction of the auxiliary line (HS) in the form of the transistor (3) of the respective monitoring pair (P1, P2, P, P4), the main switch (4) being designed as a self-locking p-channel MOSFET which is electrically connected on the source side to the voltage input (SE), on the drain side to the power string and on the gate side to a voltage input end of the auxiliary string.

6. Lighting device (1) according to claim 5, wherein the voltage input-side end of the auxiliary line (HS) is connected to the voltage input (SE) via an ohmic auxiliary resistor (5) and a ground-side end of the auxiliary line (HS) is connected to the connector (ME), wherein a node (K) is formed between the auxiliary line (HS) and the ohmic auxiliary resistor (5), which is connected to the gate (G4) of the main switch (4) in such a way that when the auxiliary line (HS) is blocked, the potential of the node (K) is changed in such a way that the main switch (4) blocks and when the auxiliary line (HS) conducts, the potential of the node (K) is changed in such a way that the main switch (4) conducts.

7. Lighting device (1) according to claim 4, wherein the transistors (3) of the auxiliary line (HS) are designed as self-locking p-channel MOSFETS, wherein an ohmic resistor is connected in series between the transistors (3) and the coupling between light source (2) and transistor (3) takes place for each monitoring pair, in that the anode of the light source (2) is connected to the source of the transistor (3) and the cathode of the light source (2) is connected to the gate of the transistor (3), wherein those anode connections which emanate from connection points (P) located between light sources (2) are each provided with a diode defining the power flow between the power line (LS) and the auxiliary line (HS), the direction of flow of the diodes being switched in the direction of the power line (LS) for this purpose, wherein the main switch (4) is designed as a self-locking n-channel MOSFET which is electrically connected on the source side to the connector (ME), on the drain side to the power line (LS) and on the gate side to an end of the auxiliary line (HS) on the earth connection side.

8. Lighting device (1) according to claim 7, wherein the end of the auxiliary line (HS) on the earth connection side is connected to the connector (ME) via an ohmic auxiliary resistor (5) and an end of the auxiliary line (HS) on the voltage input side is connected directly to the voltage input (SE), wherein a node (K) is formed between the auxiliary line (HS) and the ohmic auxiliary resistor (5), which is connected to the gate (G4) of the main switch (4) in such a way that, if the auxiliary line (HS) is blocked, the potential of the node (K) is changed in such a way that the main switch (4) blocks and, if the auxiliary line (HS) conducts, the potential of the node (K) is changed in such a way that the main switch (4) conducts.

9. Vehicle headlamp comprising a lighting device according to one of the preceding claims 1 to 8.

## Revendications

1. Dispositif d'éclairage (1) à détection de défaut de court-circuit pour un projecteur de véhicule automobile, comprenant
- une entrée de tension (SE) et une borne (ME) pour la connexion au potentiel de masse,
- une ligne de puissance (LS) alimentée par l'entrée de tension (SE) et comprenant un certain nombre de sources lumineuses (2) à surveiller, ce nombre étant d'au moins deux, les sources lumineuses (2) étant agencées pour émettre la lumière du dispositif d'éclairage (1) et les sources lumineuses (2) étant montées en série les unes avec les autres à l'intérieur de la ligne de puissance (LS),
le dispositif d'éclairage (1) comprenant en outre
- une ligne auxiliaire (HS) dans laquelle sont disposés des transistors (3) montés en série, l'un des transistors (3) étant associé à chaque source lumineuse (2) de la ligne de puissance (LS), et formant ainsi une paire de surveillance (P1, P2, P3, P4), constituée d'une source lumineuse (2) à surveiller et d'un transistor (3) associé à la surveillance, chaque transistor (3) étant couplé à la cathode et à l'anode de la source lumineuse (2) de telle sorte que la tension chutant en fonctionnement normal aux bornes de la source lumineuse (2) soit utilisée à cet effet, le transistor (3) et, en cas de court-circuit de la source lumineuse (2), la chute de tension provoquée par le court-circuit entraîne un blocage du transistor (3) et donc de la ligne auxiliaire (HS), le dispositif d'éclairage (1) détectant les défauts de court-circuit présentant en outre un dispositif de détection de défaut (6) couplé à la ligne auxiliaire (HS), qui est conçu pour émettre un signal de défaut (SF) ou pour déclencher une routine de défaut (FR) en cas de blocage de la ligne auxiliaire,
**caractérisé en ce que** le dispositif de
dispositif de détection de défaut (6) pour l'exécution d'une routine de défaut (FR) dans laquelle le fonctionnement des sources lumineuses (2) est coupé automatiquement en cas de détection d'un défaut, dans lequel il est prévu à cet effet qu'aussi bien la ligne de puissance (LS) que la ligne auxiliaire (HS) s'étendent entre l'entrée de tension (SE) et la borne de masse (ME) et le dispositif de détection de défaut (6) est conçu comme un interrupteur principal (4), qui est disposé en série avec la ligne de puissance (LS) et qui est couplé à la ligne auxiliaire (HS) de telle sorte que, dans le cas d'une mise en circuit de la ligne auxiliaire (HS), l'interrupteur principal (4) est électriquement conducteur et, dans le cas d'un blocage de la ligne auxiliaire (HS), il est électriquement bloqué.

2. Dispositif d'éclairage (1) selon la revendication 1, dans lequel les transistors (3) de la ligne auxiliaire (HS) sont conçus comme des transistors bipolaires npn, une résistance ohmique étant respectivement montée en série entre les transistors (3) et, pour chaque paire de surveillance (P1, P2, P3, P4), le couplage entre la source lumineuse (2) et le transistor (3) s'effectue en reliant l'anode de la source lumineuse (2) à la base du transistor et en reliant la cathode de la source lumineuse (2) à l'émetteur du transistor (3), les liaisons qui partent de points de connexion (P) situés entre les sources lumineuses (2), sont respectivement pourvues d'une diode (7) déterminant le flux de puissance entre la ligne de puissance (LS) et la ligne auxiliaire (HS), le sens de flux des diodes (7) étant à cet effet commuté en direction de la ligne auxiliaire sous la forme du transistor (3) de la paire de surveillance respective (P1, P2, P3, P4), l'interrupteur principal (4) étant conçu comme un MOSFET à canal p autobloquant qui est relié électriquement côté source (S4) à l'entrée de tension (SE), côté drain (D4) à la chaîne de puissance (LS) et côté grille (G4) à une extrémité côté entrée de tension de la ligne auxiliaire (HS).

3. Dispositif d'éclairage (1) selon la revendication 2, dans lequel l'extrémité côté entrée de tension de la ligne auxiliaire (HS) est reliée à l'entrée de tension par l'intermédiaire d'une résistance auxiliaire ohmique (5) et une extrémité côté masse de la ligne auxiliaire est reliée à la borne de masse (ME), un point nodal (K) étant formé entre la ligne auxiliaire (HS) et la résistance auxiliaire ohmique (5), qui est relié à la grille (G4) de l'interrupteur principal (4) de telle sorte qu'en cas de blocage de la ligne auxiliaire (HS), le potentiel du point nodal (K) est modifié de telle sorte que l'interrupteur principal (4) est bloqué et qu'en cas de conduction de la ligne auxiliaire (HS), le potentiel du point nodal (K) est modifié de telle sorte que l'interrupteur principal (4) est conducteur.

4. Dispositif d'éclairage (1) selon la revendication 1, dans lequel les transistors (3) de la ligne auxiliaire (HS) sont conçus comme des transistors MOSFET à blocage automatique.

5. Dispositif d'éclairage (1) selon la revendication 4, dans lequel les transistors (3) de la ligne auxiliaire (HS) sont réalisés sous forme de MOSFETS à canal n autobloquants, une résistance ohmique (8) étant respectivement montée en série entre les transistors (3) et, pour chaque paire de surveillance (P1, P2, P3, P4), le couplage entre la source lumineuse (2) et le transistor (3) s'effectue en reliant directement l'anode de la source lumineuse (2) à la grille du transistor (3) et en reliant la cathode de la source lumineuse (2) au drain du transistor (3), les liaisons cathodiques, qui partent de points de connexion (P) situés entre les sources lumineuses (2), sont respectivement pourvues d'une diode déterminant le flux de puissance entre la ligne de puissance (LS) et la ligne auxiliaire (HS), le sens de flux des diodes étant à cet effet dirigé vers la ligne auxiliaire (HS) sous la forme du transistor (3) de la paire de surveillance respective (P1, P2, P, P4), l'interrupteur principal (4) étant conçu comme un MOSFET à canal p autobloquant qui est relié électriquement côté source à l'entrée de tension (SE), côté drain à la ligne de puissance et côté grille à une extrémité côté entrée de tension de la ligne auxiliaire.

6. Dispositif d'éclairage (1) selon la revendication 5, dans lequel l'extrémité côté entrée de tension de la ligne auxiliaire (HS) est reliée à l'entrée de tension (SE) par l'intermédiaire d'une résistance auxiliaire ohmique (5) et une extrémité côté masse de la ligne auxiliaire (HS) est reliée à la borne de masse (ME), un point nodal (K) étant formé entre la ligne auxiliaire (HS) et la résistance auxiliaire ohmique (5), qui est relié à la grille (G4) de l'interrupteur principal (4) de telle sorte qu'en cas de blocage de la ligne auxiliaire (HS), le potentiel du point nodal (K) est modifié de telle sorte que l'interrupteur principal (4) est bloqué et qu'en cas de conduction de la ligne auxiliaire (HS), le potentiel du point nodal (K) est modifié de telle sorte que l'interrupteur principal (4) est conducteur.

7. Dispositif d'éclairage (1) selon la revendication 4, dans lequel les transistors (3) de la ligne auxiliaire (HS) sont réalisés sous la forme de MOSFETS à canal p autobloquants, une résistance ohmique étant respectivement montée en série entre les transistors (3) et le couplage entre la source lumineuse (2) et le transistor (3) s'effectuant à chaque paire de surveillance, en reliant l'anode de la source lumineuse (2) à la source du transistor (3) et en reliant la cathode de la source lumineuse(2) à la grille du transistor (3), les liaisons anodiques, qui partent de points de connexion (P) situés entre les sources lumineuses (2), sont respectivement pourvues d'une diode déterminant le flux de puissance entre la ligne de puissance (LS) et la ligne auxiliaire (HS), le sens de flux des diodes étant à cet effet commuté en direction de la ligne de puissance (LS), l'interrupteur principal (4) étant conçu comme un MOSFET à canal n autobloquant qui est relié électriquement côté source à la borne de masse (ME), côté drain à la ligne de puissance (LS) et côté grille à une extrémité côté borne de masse de la ligne auxiliaire (HS).

8. Dispositif d'éclairage (1) selon la revendication 7, dans lequel l'extrémité côté connexion de masse de la ligne auxiliaire (HS) est connectée à la connexion de masse (ME) par l'intermédiaire d'une résistance auxiliaire ohmique (5) et une extrémité côté entrée de tension de la ligne auxiliaire (HS) est connectée directement à l'entrée de tension (SE), un point nodal (K) étant formé entre la ligne auxiliaire (HS) et la résistance auxiliaire ohmique (5), qui est relié à la grille (G4) de l'interrupteur principal (4) de telle sorte qu'en cas de blocage de la ligne auxiliaire (HS), le potentiel du point nodal (K) est modifié de telle sorte que l'interrupteur principal (4) est bloqué et qu'en cas de conduction de la ligne auxiliaire (HS), le potentiel du point nodal (K) est modifié de telle sorte que l'interrupteur principal (4) est conducteur.

9. Projecteur de véhicule comprenant un dispositif d'éclairage selon l'une quelconque des revendications précédentes 1 à 8.
